# DEMANDE DE BREVET EUROPEEN

(11) **EP 2 103 274 A1**
(43) Date de publication de la demande: **23.09.2009**
(21) Numéro de dépôt: 09290193.3
(22) Date de dépôt: 17.03.2009
(51) Int. Cl.: A61C 5/00, A61C 13/30

(54) **Pivot dentaire à extrémité apicale anti-amorce de fêlures et de fractures radiculaires**

(30) Priorité: 18.03.2008 FR 0851737
(71) Demandeur: Malek, Pierre, Key Biscayne, FL 33149 (US)
(72) Inventeur: Malek, Pierre, Key Biscayne, FL 33149 (US)
(74) Mandataire: Novagraaf IP

(57) **Abrégé**

La présente invention concerne un pivot radiculaire **caractérisé en ce que** l'extrémité apicale du pivot présente une extrémité hémisphérique avec une variation de courbure continue entre la partie cylindro-conique et l'extrémité apicale (1).

L'invention concerne également un foret pour la préparation du logement radiculaire destiné à recevoir un tel pivot, ainsi que le système constitué par un pivot et le foret complémentaire.

## Description

La présente invention concerne le domaine des pivots dentaires. Un pivot dentaire est constitué par une structure cylindrique de trois à vingt millimètres de long, pouvant être couronnée. Le pivot dentaire est destiné à l'ancrage au niveau de la racine de la dent par un ciment. Le pivot peut présenter un filetage extérieur et se visse dans la racine de la dent sensiblement verticalement dans la région du canal radiculaire de manière à former une liaison amovible entre le pivot d'ancrage et la racine de la dent.

On connaît le brevet EP0305934 décrivant un pivot dentaire présentant une tige dont la partie apicale du pivot est cylindrique, qui est suivie d'une partie cervicale tronconique se prolongeant par une tête adjacente à la partie tronconique. La tête sert à la reconstitution, en composite ou en amalgame, d'un moignon destiné à recevoir une couronne dentaire. La tête est de section non circulaire, ce qui correspond mieux à la forme d'une dent naturelle que si elle était de forme circulaire, mais nécessite de pouvoir orienter le pivot lorsqu'il est en place dans le canal radiculaire, après préparation endodontique de celui-ci, en fonction de l'arc dentaire.

La tige est entièrement lisse. La partie apicale du pivot est très rétentive alors que la partie cervicale offre une base robuste à la reconstitution du moignon, prenant un appui solide sur la couronne naturelle.

On connaît aussi des pivots présentant une tige filetée sur une partie de sa longueur. Le brevet américain US4334865 décrit un tel pivot présentant une extrémité filetée, permettant l'ancrage à l'aide d'un ciment ou une pâte de scellement. Ce pivot peut être réalisé en titane ou encore en un matériau de synthèse.

Le problème qui se pose avec de tels pivots est celui des efforts exercés par le pivot sur la racine lors de la mastication des aliments, qui peuvent provoquer un descellement à l'origine de fractures corono-radiculaires.

Lors de la mastication, les dents sont soumises à deux types de contraintes, de compression et de cisaillement.

Les contraintes de compression s'exercent notamment au niveau des dents postérieures (prémolaires et molaires). Les contraintes de cisaillement s'exercent principalement sur les dents antérieures (incisives et canines).

Les dents reconstituées par la mise en place d'un ou de plusieurs pivots radiculaires sont particulièrement sensibles à ces efforts.

Les pivots radiculaires sont scellés dans la racine par l'intermédiaire d'une tige lisse, striée ou filetée. Les pivots de l'état de la technique se terminent par une pointe conique (voir figure 1) formant une pente de 120° à 160° ou plate (voir figures 2 et 3), pour se loger dans un logement pratiqué dans la racine avec un foret de forme complémentaire.

Ces pointes coniques ou plates présentent des arêtes vives annulaires à l'intersection de la partie lisse conique ou cylindrique et de l'extrémité conique ou plane. Lors des mouvements occasionnés par les contraintes de cisaillement et de compression, les arêtes exercent une tension sur la surface intérieure de la racine pouvant provoquer des amorces de fêlures et de fractures, par un effet de coin ou de cisaillement.

La présente invention a pour but de remédier à cet inconvénient en proposant une forme apicale du pivot dépourvue d'arête annulaire, avec une extrémité hémisphérique en forme de rotule.

À cet effet, l'invention concerne selon son acception la plus générale un pivot radiculaire caractérisé en ce que l'extrémité apicale du pivot présente une extrémité hémisphérique avec une variation de courbure continue entre la partie cylindrique ou conique, et l'extrémité distale.

Selon une variante, l'extrémité de l'extrémité apicale du pivot présente une forme ogivale.

Selon une autre variante, l'extrémité de l'extrémité apicale du pivot présente une forme sphéroïdale.

De préférence, l'extrémité apicale du pivot présente une extrémité hémisphérique dont le rayon de courbure n'est jamais inférieur à 0,1 millimètre.

L'invention concerne aussi un système comprenant un foret pour la préparation d'un logement radiculaire destiné à recevoir un pivot radiculaire, et d'un pivot caractérisé en ce que l'extrémité du foret et du pivot sont de formes hémisphériques complémentaires, et homothétiques.

L'invention concerne encore un foret pour la préparation d'un logement radiculaire caractérisé en ce que son extrémité est de forme hémisphérique et plus précisément, soit :
- de forme ogivale,
- de forme sphéroïdale,
- de forme hémisphérique dont le rayon de courbure n'est jamais inférieur à 0,1 millimètre.

L'invention sera mieux comprise à la lecture de la description détaillée qui suit, se référant aux dessins annexés où :

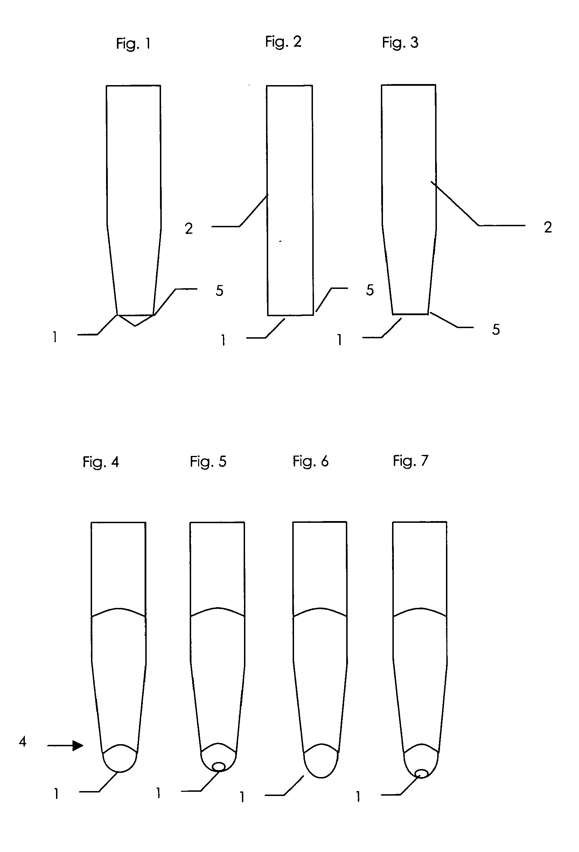

- les figures 1 à 3 représentent des vues schématiques d'un pivot selon l'art antérieur,
- les figures 4 à 7 représentent des vues en perspective de variantes de réalisation de l'invention.

La figure 1 représente un exemple de réalisation connu d'un pivot présentant une extrémité apicale (1) de forme conique. La figure 2 représente une variante de l'état de la technique où le pivot présente un corps (2) cylindrique, avec une extrémité apicale (1) plane. La figure 3 représente une variante de l'état de la technique où le pivot présente un corps (2) tronconique, avec une extrémité apicale (1) plane.

Dans les différentes réalisations de l'art antérieur, le pivot présente une ligne (5) formant une arête vive annulaire, avec une rupture de pente entre la partie amont et la partie avale. Cette arête vive annulaire exerce sur la surface intérieure de la racine des contraintes pouvant entraîner avec le temps un descellement à l'origine des fêlures et des fractures.

La figure 4 représente une vue schématique d'un pivot selon l'invention. Il est constitué par une tige (2) en titane. La forme générale de la tige (2) est conique, avec une section décroissante vers l'extrémité apicale du pivot (1). L'extrémité distale présente de façon connue un moyen d'accrochage d'une couronne.

L'extrémité apicale du pivot prolonge la tige sans rupture de pente et sans arête annulaire, par une partie hémisphérique présentant sensiblement la forme d'une portion de sphère d'un rayon de courbure de 0,5 millimètres, et s'étendant sur un peu moins d'une demi-sphère de manière à prolonger l'extrémité cylindrique ou conique de la tige sans rupture de pente.

Les figures 5 à 7 représentent des vues en perspective d'une variante où la pointe apicale du pivot est de forme hémisphérique tronquée avec une extrémité distale plane (Méplat), ou ogivale (figure 6) ou encore ogivale avec un méplat (figure 7).

## Revendications

1. Pivot radiculaire, **caractérisé en ce que** ce que l'extrémité apicale du pivot présente une extrémité hémisphérique tronquée avec une extrémité distale plane avec une variation de courbure continue entre la partie cylindro-conique et l'extrémité apicale (1).

2. Pivot radiculaire selon la revendication 1,
**caractérisé en ce que** l'extrémité apicale du pivot (1) présente une forme ogivale tronquée avec une extrémité distale plane.

3. Pivot radiculaire selon la revendication 1,
**caractérisé en ce que** l'extrémité apicale du pivot (1) présente une forme ovoïde tronquée avec une extrémité distale plane.

4. Pivot radiculaire selon la revendication 1,
**caractérisé en ce que** l'extrémité apicale du pivot (1) présente une forme sphéroïdale tronquée avec une extrémité distale plane.

5. Pivot radiculaire selon la revendication 1,
**caractérisé en ce que** l'extrémité apicale du pivot (1) présente une extrémité hémisphérique dont le rayon de courbure n'est jamais inférieur à 0,1 millimètre.

6. Système comprenant un pivot radiculaire conforme à l'une des revendications 1 à 5 et un foret pour la préparation d'un logement radiculaire destiné à recevoir ledit pivot, **caractérisé en ce que** les extrémités apicales dudit pivot et dudit foret sont de formes hémisphériques tronquée avec une extrémité distale plane complémentaires.

7. Foret pour la préparation d'un logement radiculaire, **caractérisé en ce que** l'extrémité dudit foret est de forme hémisphérique tronquée avec une extrémité distale plane.

8. Foret pour la préparation d'un logement radiculaire, **caractérisé en ce que** l'extrémité dudit foret est de forme ogivale tronquée avec une extrémité distale plane.

9. Foret radiculaire selon la revendication 7,
**caractérisé en ce que** l'extrémité dudit foret présente une forme sphéroïdale tronquée avec une extrémité distale plane.

10. Foret radiculaire selon la revendication 8, **caractérisé en ce que** l'extrémité dudit foret présente une extrémité hémisphérique tronquée avec une extrémité distale plane dont le rayon de courbure n'est jamais inférieur à 0,1 millimètre.
